# EUROPÄISCHE PATENTANMELDUNG

(11) **EP 3 360 673 A1**
(43) Veröffentlichungstag der Anmeldung: **15.08.2018**
(21) Anmeldenummer: 17020050.5
(22) Anmeldetag: 10.02.2017
(51) Int. Cl.: B30B 1/26, B30B 15/04, B30B 15/06, B29C 53/24, B30B 15/00, B21D 13/02, B31F 1/24

(54) **PACKUNGSBLECHBIEGEVORRICHTUNG**

(71) Anmelder: Linde Aktiengesellschaft, 80331 München (DE)
(72) Erfinder: Kanzler, Karlmann, 84504 Altötting (DE)
(74) Vertreter: Meilinger, Claudia Sabine

(57) **Zusammenfassung**

Eine Packungsblechbiegevorrichtung (31) zum Herstellen eines gewellten Packungsblechs (10) für eine strukturierte Packung (3) einer Stoffaustauschkolonne (1), mit einem Umformwerkzeug (14), das dazu eingerichtet ist, an einem unverformten Packungsblech (10') Wellen (13) anzuformen, einer ersten Antriebseinrichtung (49) zum Bewegen einer ersten Werkzeughälfte (15) des Umformwerkzeugs (14), einer zweiten Antriebseinrichtung (50) zum Bewegen einer zweiten Werkzeughälfte (15) des Umformwerkzeugs (14), und einer Positioniereinrichtung (74) zum Positionieren der ersten Werkzeughälfte (15) relativ zu der zweiten Werkzeughälfte (16).

## Beschreibung

Die Erfindung betrifft eine Packungsblechbiegevorrichtung zum Herstellen eines gewellten Packungsblechs für eine strukturierte Packung einer Stoffaustauschkolonne.

Mit Hilfe von Stoffaustauschkolonnen, wie Rektifikations- oder Luftzerlegungssäulen, ist es möglich, verflüssigte Luft in ihre Bestandteile zu zerlegen. Eine derartige Stoffaustauschkolonne weist einen zylinderförmigen Behälter auf, in dem sogenannte Packungen angeordnet sind. Hierbei wird zwischen ungeordneten und geordneten Packungen unterschieden. Ungeordnete Packungen sind Schüttungen aus definiert geformten Körpern, wie Ringen, Zylindern, Sattelkörpern oder dergleichen. Im Gegensatz hierzu werden bei geordneten Packungen Metallgewebe oder -bleche so gefaltet und/oder gewickelt, dass es zu einer intensiven Lenkung des Dampfes und der Flüssigkeit und damit verbundenem intensiven Kontakt beider kommt. Bei geordneten Packungen werden mehrere Packungsscheiben aufeinandergestapelt. Die Packungsscheiben sind jeweils wiederum aus einer Vielzahl an aufeinandergestapelten gewellten Packungsblechen aufgebaut.

Die EP 0 739 846 A1 beschreibt eine Vorrichtung zum Herstellen eines schrägplissierten Metallstreifens. Die Vorrichtung umfasst ein Paar an parallel angeordneten, ineinander greifenden Zahnwalzen.

Die EP 1 044 787 B1 zeigt ein Verfahren zum Formgeben von streifenförmigen Folien. Bei dem Verfahren werden ineinander greifende Zahnwalzen verwendet.

Die CN 203678982 U beschreibt eine Vorrichtung zum Herstellen eines gewellten Metallstreifens. Die Vorrichtung umfasst zwei Werkzeughälften, wobei eine obere Werkzeughälfte zum Umformen des Metallstreifens senkrecht auf diesen zu gefahren wird.

Die Aufgabe der vorliegenden Erfindung besteht darin, eine verbesserte Packungsblechbiegevorrichtung zur Verfügung zu stellen.

Demgemäß wird eine Packungsblechbiegevorrichtung zum Herstellen eines gewellten Packungsblechs für eine strukturierte Packung einer Stoffaustauschkolonne vorgeschlagen. Die Packungsblechbiegevorrichtung umfasst ein Umformwerkzeug, das dazu eingerichtet ist, an einem unverformten Packungsblech Wellen anzuformen, eine erste Antriebseinrichtung zum Bewegen einer ersten Werkzeughälfte des Umformwerkzeugs, eine zweite Antriebseinrichtung zum Bewegen einer zweiten Werkzeughälfte des Umformwerkzeugs, und eine Positioniereinrichtung zum Positionieren der ersten Werkzeughälfte relativ zu der zweiten Werkzeughälfte.

Durch die Einstellbarkeit der ersten Werkzeughälfte relativ zu der zweiten Werkzeughälfte kann ein Biegevorgang zum Herstellen des gewellten Packungsblechs optimiert werden. Hierdurch kann eine Durchsatzerhöhung stattfinden.

Insbesondere trägt die Positioniereinrichtung die erste Antriebseinrichtung mitsamt der ersten Werkzeughälfte. Mit Hilfe der Positioniereinrichtung können somit die erste Antriebseinrichtung und die erste Werkzeughälfte zusammen relativ zu der zweiten Werkzeughälfte positioniert werden. Vorzugsweise weist die erste oder untere Werkzeughälfte eine Vielzahl an Biegeleisten auf, wobei jeder Biegeleiste eine Biegekante zugeordnet ist. Korrespondierend dazu weist die zweite oder obere Werkzeughälfte ebenfalls eine Vielzahl an Biegeleisten auf, wobei jeder Biegeleiste eine Biegekante zugeordnet ist. Die Biegekanten der ersten Werkzeughälfte und die Biegekanten der zweiten Werkzeughälfte sind so angeordnet, dass jeweils immer eine Biegekante der ersten Werkzeughälfte zwischen zwei Biegekanten der zweiten Werkzeughälfte und umgekehrt angeordnet ist. Die Biegeleisten der ersten Werkzeughälfte und die Biegeleisten der zweiten Werkzeughälfte sind in ihrer Höhe und in ihrem Abstand voneinander einstellbar, wodurch mit jedem Arbeitshub des Umformwerkzeugs nur eine Welle fertiggeformt wird und mehrere Wellen vorgeformt werden. Hierdurch wird das unverformte Packungsblech besonders schonend gebogen und insbesondere gefaltet.

In einer Maschinenrichtung der Packungsblechvorrichtung betrachtet ragen die Biegeleisten schrittweise immer weiter in einen Umformbereich des Umformwerkzeugs hinein. Zusätzlich sind die Abstände zwischen den Biegeleisten in der Maschinenrichtung betrachtet stufenweise immer kleiner. Dadurch, dass die Biegeleisten unterschiedlich weit in den Umformbereich hineinragen, kann die Welle schrittweise an das unverformte Packungsblech angeformt werden. Bei jedem Hub des Umformwerkzeugs wird die Welle durch die in der Maschinenrichtung nachfolgende Biegeleiste vertieft, bis die gewünschte Tiefe der Welle erreicht ist. Mit zunehmender Tiefe der Welle wird der Abstand zwischen den Biegeleisten geringer, so dass Wellenberge und Wellentäler der Wellen auf dem Packungsblech nicht beziehungsweise nur geringfügig über die Blechoberfläche wandern müssen. Hierdurch wird das Packungsblech mechanisch wenig beansprucht, wodurch die Gefahr eines Abreißens des Packungsblechs reduziert wird.

Zwischen der ersten Werkzeughälfte und der zweiten Werkzeughälfte befindet sich das endlose unverformte Packungsblech. Wenn die Werkzeughälften mit Hilfe der Antriebseinrichtungen winkelsynchron angetrieben werden, bewegen sich die erste Werkzeughälfte und die zweite Werkzeughälfte jeweils auf einer Kreisbahn. Diese Bewegungen haben dabei eine horizontale und eine vertikale Komponente. Die vertikale Komponente bewirkt ein Eindringen der ersten Werkzeughälfte und der zweiten Werkzeughälfte in das Packungsblech, wenn sich die zweite Werkzeughälfte einem unteren Totpunkt nähert und die erste Werkzeughälfte sich einem oberen Totpunkt nähert. Zu diesem Zeitpunkt ist das Umformwerkzeug maximal in das Packungsblech eingedrungen und hat eine maximale horizontale Bewegungskomponente in der Maschinenrichtung. Das Packungsblech wird dadurch in der Maschinenrichtung vorgeschoben. Nachdem sich die Werkzeughälften weitergedreht haben, verlieren sie ihren Kontakt zum Packungsblech. Auf der Kreisbahn bewegt sich die zweite Werkzeughälfte mit einem Durchgang durch einen oberen Totpunkt und die erste Werkzeughälfte mit einem Durchgang durch einen unteren Totpunkt in Richtung des Packungsblechs zurück, um dort durch die zunehmende Vertikalbewegung wieder in das Packungsblech einzudringen und eine weitere Verformung durchzuführen.

Gemäß einer Ausführungsform ist die erste Antriebseinrichtung dazu eingerichtet, die erste Werkzeughälfte senkrecht und parallel zu einer Maschinenrichtung der Packungsblechbiegevorrichtung zu bewegen.

Die Maschinenrichtung ist bevorzugt definiert als eine Richtung, in der das Packungsblech durch das Umformwerkzeug hindurchgefördert wird. Die erste Antriebseinrichtung kann einen ersten Werkzeugträger aufweisen, der die erste Werkzeughälfte trägt. Der erste Werkzeugträger ist bevorzugt zwischen zwei Lagerblöcken angeordnet. An jedem Werkzeugträger ist eine erste Exzenterachse und eine beabstandet von der ersten Exzenterachse angeordnete zweite Exzenterachse vorgesehen. Die Exzenterachsen sind drehfest in dem jeweiligen Werkzeugträger gelagert. Die Exzenterachsen wiederum sind in oder an Exzenterkörpern drehbar gelagert. Die Exzenterkörper sind drehbar in oder an den Lagerblöcken gelagert. Jedem Werkzeugträger sind insbesondere vier derartige Exzenterkörper zugeordnet. Die Exzenterkörper bewegen den entsprechenden Werkzeugträger auf einer Kreisbahn und halten den Werkzeugträger stets waagrecht, indem die Exzenterkörper winkelsynchron laufen. Eine Drehrichtung der Exzenterkörper der ersten Werkzeughälfte ist dabei entgegengesetzt zu einer Drehrichtung der Exzenterkörper der zweiten Werkzeughälfte orientiert. Die Exzenterkörper der ersten Werkzeughälfte und die Exzenterkörper der zweiten Werkzeughälfte laufen dabei spiegelbildlich drehwinkelsynchron. Das heißt, wenn die obere oder zweite Werkzeughälfte an dem oberen Totpunkt ist, befindet sich die untere oder erste Werkzeughälfte an dem unteren Totpunkt und umgekehrt.

Gemäß einer weiteren Ausführungsform ist die zweite Antriebseinrichtung dazu eingerichtet, die zweite Werkzeughälfte senkrecht und parallel zu der Maschinenrichtung zu bewegen.

Vorzugsweise sind die erste Antriebseinrichtung und die zweite Antriebseinrichtung synchronisiert. Jede Antriebseinrichtung kann mehrere Antriebselemente, beispielsweise Elektro-, Hydraulik- oder Pneumatikmotoren umfassen.

Gemäß einer weiteren Ausführungsform sind die Antriebseinrichtungen dazu eingerichtet, die Werkzeughälften senkrecht und gegensinnig zu der Maschinenrichtung sowie parallel und gleichsinnig zu der Maschinenrichtung zu bewegen.

Hierdurch bewegen sich die Werkzeughälften gegensinnig auf einer Kreisbahn, wobei die beiden Werkzeughälften stets waagrecht gehalten werden, da die jeweiligen Exzenterkörper winkelsynchron laufen.

Gemäß einer weiteren Ausführungsform umfasst die Packungsblechbiegevorrichtung ferner eine erste Rahmeneinrichtung, in der das Umformwerkzeug aufgenommen ist, wobei die erste Rahmeneinrichtung ein erstes Rahmenelement, an dem die erste Werkzeughälfte vorgesehen ist, und ein verschwenkbar an dem ersten Rahmenelement gelagertes zweites Rahmenelement umfasst, an dem die zweite Werkzeughälfte vorgesehen ist.

Das zweite Rahmenelement ist vorzugsweise mit Hilfe einer Schwenkachse drehbar an der ersten Rahmeneinrichtung gelagert. Das erste Rahmenelement ist im Querschnitt beispielsweise U-förmig und weist zwei parallel zueinander im Abstand voneinander angeordnete Seitenwände auf. Das zweite Rahmenelement ist im Querschnitt vorzugsweise L-förmig aufgebaut.

Gemäß einer weiteren Ausführungsform umfasst die erste Rahmeneinrichtung ein Verriegelungselement, das dazu eingerichtet ist, das erste Rahmenelement und das zweite Rahmenelement formschlüssig miteinander zu verriegeln.

Eine formschlüssige Verbindung entsteht durch das Ineinander- oder Hintergreifen von mindestens zwei Verbindungspartnern. Das Verriegelungselement weist vorzugsweise einen Eingriffsabschnitt auf, der dazu eingerichtet ist, formschlüssig in einen korrespondieren Gegeneingriffsabschnitt des zweiten Rahmenelements einzugreifen. Der Eingriffsabschnitt ist vorzugsweise mit Hilfe eines Antriebselements, beispielsweise eines Elektromotors, eines Hydraulik- oder Pneumatikzylinders, ansteuerbar.

Gemäß einer weiteren Ausführungsform umfasst die erste Rahmeneinrichtung ein Antriebselement, das dazu eingerichtet ist, die erste Rahmeneinrichtung von einem geschlossenen Zustand in einen geöffneten Zustand und umgekehrt zu verbringen.

In dem geöffneten Zustand ist das Umformwerkzeug geöffnet, und die zweite Werkzeughälfte ist von der ersten Werkzeughälfte weggeschwenkt. Vorzugsweise trägt das erste Rahmenelement die erste Werkzeughälfte und das zweite Rahmenelement trägt die zweite Werkzeughälfte. In dem geöffneten Zustand kann eine Fläche des zweiten Rahmenelements als Arbeitsbühne für einen Benutzer verwendet werden. Durch die Verschwenkbarkeit der beiden Rahmenelemente sind die Werkzeughälften gut zugänglich.

Gemäß einer weiteren Ausführungsform umfasst die Packungsblechbiegevorrichtung ferner eine zweite Rahmeneinrichtung, die verschwenkbar an der ersten Rahmeneinrichtung gelagert ist und die eine Transporteinrichtung, eine Bremseinrichtung und/oder eine Führungseinrichtung trägt.

Die zweite Rahmeneinrichtung ist vorzugsweise mit Hilfe einer horizontal angeordneten Schwenkachse verschwenkbar an der ersten Rahmeneinrichtung gelagert. Durch ein Verschwenken der zweiten Rahmeneinrichtung gegenüber der ersten Rahmeneinrichtung kann ein Blecheinlaufwinkel verändert werden. Die Transporteinrichtung kann auch als Fördereinrichtung oder Vorschub bezeichnet werden. Die Transporteinrichtung kann ein mechanischer Rollen- oder Bandvorschub sein. Alternativ kann die Transporteinrichtung ein berührungsloser Vorschub, der auf dem Wirbelstromprinzip arbeitet, sein. Die Transporteinrichtung umfasst vorzugsweise eine eigene Messeinrichtung zum Erfassen einer Lage des Packungsblechs. Die Bewegung des Packungsblechs durch das Umformwerkzeug hindurch kann hierdurch festgestellt werden und mit Hilfe einer Regel- oder Steuereinheit kann die notwendige ergänzende Vorschubbewegung durchgeführt werden. Zusätzlich kann zur Bewegungssteuerung des Packungsblechs die Bremseinrichtung vorgesehen sein. Die Bremskraft auf das Packungsblech kann dabei elektrisch, pneumatisch oder hydraulisch aufgebracht werden. Durch eine separate Regel- und Steuereinheit kann der richtige Bremspunkt ermittelt werden, so dass das Packungsblech exakt in der richtigen Lage für die nächste Umformsequenz zum Stehen kommt. Mit Hilfe der Führungseinrichtung kann das Packungsblech seitlich und von oben nach unten ausreichend geführt sein. Die Transporteinrichtung, die Bremseinrichtung und die Führungseinrichtung sind in der Maschinenrichtung dem Umformwerkzeugs vorgeschaltet. Optional kann noch eine dem Umformwerkzeug nachgeschaltete Führungseinrichtung vorgesehen sein. Durch die Vorschubbewegung wird das Packungsblech, das bevorzugt von einem sogenannten Coil oder Blechcoil abgerollt wird, mit jeder Bewegung der Werkzeughälften um eine Welle vorwärtsbewegt. Mit jeder Kreisbewegung der Antriebseinrichtungen wird jeweils eine Welle fertiggeformt und mehrere Wellen werden vorgeformt.

Gemäß einer weiteren Ausführungsform ist die Positioniereinrichtung dazu eingerichtet, die erste Werkzeughälfte um eine y-Richtung zu verdrehen, entlang der y-Richtung zu verfahren, um eine z-Richtung zu verdrehen und/oder entlang der z-Richtung zu verfahren.

Vorzugsweise umfasst die Packungsblechbiegevorrichtung ein Koordinatensystem mit einer ersten Raumrichtung oder x-Richtung, einer zweiten Raumrichtung oder y-Richtung und einer dritten Raumrichtung oder z-Richtung. Vorzugsweise ist die Positioniereinrichtung dazu eingerichtet, die zweite Werkzeughälfte in allen drei Raumrichtungen zu verfahren und um alle drei Raumrichtungen zu drehen. Hierdurch ist eine sehr flexible Positionierung der zweiten Werkzeughälfte relativ zu der ersten Werkzeughälfte möglich. Hierdurch kann der Umformprozess zum Herstellen des Packungsblechs optimiert werden.

Gemäß einer weiteren Ausführungsform umfasst die Positioniereinrichtung einen Positionierrahmen, der die erste Werkzeughälfte trägt, ein erstes Linearmodul und ein zweites Linearmodul, wobei die Linearmodule dazu eingerichtet sind, die erste Werkzeughälfte um die y-Richtung zu verkippen und/oder entlang der z-Richtung zu verfahren.

Ein derartiges Linearmodul umfasst vorzugsweise ein Führungselement, das eine Verschiebung einer Komponente in einer linearen Weise zulässt, ein Antriebselement zum Antreiben des Linearmoduls sowie zumindest ein Klemmelement zur Klemmung in der entsprechenden Bewegungsrichtung. Das Antriebselement kann elektrisch, hydraulisch, pneumatisch oder manuell angetrieben sein. Das oder die Klemmelemente können elektrisch, hydraulisch, pneumatisch oder manuell angetrieben sein. Weiterhin kann das Linearmodul eine Lagesensorik und eine Steuerung umfassen. Vorzugsweise umfasst das erste Rahmenelement der ersten Rahmeneinrichtung zwei parallel zueinander und voneinander beabstandet angeordnete Seitenwände, an denen die Linearmodule angeordnet sind. Jedes Linearmodul ist bevorzugt mit Hilfe einer Drehachse verschwenkbar mit den Positionierrahmen gekoppelt. Der Positionierrahmen ist im Querschnitt U-förmig. Der Positionierrahmen trägt die erste Werkzeughälfte. Durch eine gleichmäßige Vertikalbewegung der Linearmodule kann die erste Werkzeughälfte entlang der z-Richtung verfahren werden. Durch unterschiedliche Bewegungen der beiden Linearmodule kann die erste Werkzeughälfte um die y-Richtung gekippt werden.

Gemäß einer weiteren Ausführungsform umfasst die Positioniereinrichtung ein Drehmodul, das dazu eingerichtet ist, die erste Werkzeughälfte um die z-Richtung zu verdrehen.

Das Drehmodul kann ein Führungselement umfassen, das eine Drehung einer Komponente, beispielsweise der ersten Werkzeughälfte, zulässt. Ferner kann das Drehmodul ein Antriebselement zum Ermöglichen dieser Drehbewegung umfassen. Das Antriebselement kann elektrisch, hydraulisch, pneumatisch oder manuell angetrieben sein. Das Drehmodul kann auch eine Lagesensorik und Steuerung aufweisen. Vorzugsweise ist die erste Werkzeughälfte auf dem Drehmodul positioniert.

Gemäß einer weiteren Ausführungsform ist das Drehmodul zwischen einen Positionierrahmen der Positioniereinrichtung und der ersten Werkzeughälfte angeordnet.

Vorzugsweise ist die erste Werkzeughälfte fest mit dem Drehmodul verbunden. Das Drehmodul kann, wie zuvor erwähnt, ein Antriebselement aufweisen, das dazu eingerichtet ist, die erste Werkzeughälfte um die z-Achse zu verdrehen.

Gemäß einer weiteren Ausführungsform umfasst das Drehmodul ein Klemmelement zum Fixieren der ersten Werkzeughälfte in einer gewünschten Drehwinkelposition.

Hierdurch kann eine gewünschte Winkellage oder Drehwinkelposition der ersten Werkzeughälfte in Bezug auf die zweite Werkzeughälfte fixiert werden. Das Klemmelement kann elektrisch, hydraulisch, pneumatisch oder manuell angetrieben sein. Es können mehrere Klemmelemente vorgesehen sein.

Gemäß einer weiteren Ausführungsform umfasst die Positioniereinrichtung ein Linearmodul, das dazu eingerichtet ist, die erste Werkzeughälfte entlang der y-Richtung zu verfahren.

Das Linearmodul kann auch dazu eingerichtet sein, die untere Werkzeughälfte entlang der x-Richtung zu verfahren.

Gemäß einer weiteren Ausführungsform ist das Linearmodul zwischen einem Drehmodul der Positioniereinrichtung und einem Positionierrahmen der Positioniereinrichtung angeordnet.

Vorzugsweise trägt das Linearmodul das Drehmodul. Es können mehrere Linearmodule vorgesehen sein.

Weitere mögliche Implementierungen der Packungsblechbiegevorrichtung umfassen auch nicht explizit genannte Kombinationen von zuvor oder im Folgenden bezüglich der Ausführungsbeispiele beschriebenen Merkmale und Ausführungsformen. Dabei wird der Fachmann auch Einzelaspekte als Verbesserungen oder Ergänzungen zu der jeweiligen Grundform der Packungsblechbiegevorrichtung hinzufügen.

Weitere vorteilhafte Ausgestaltungen und Aspekte der Packungsblechbiegevorrichtung sind Gegenstand der Unteransprüche sowie der im Folgenden beschriebenen Ausführungsbeispiele der Packungsblechbiegevorrichtung. Im Weiteren wird die Packungsblechbiegevorrichtung anhand von bevorzugten Ausführungsformen unter Bezugnahme auf die beigelegten Figuren näher erläutert.
Fig. 1 zeigt eine schematische Schnittansicht einer Ausführungsform einer Stoffaustauschkolonne;
Fig. 2 zeigt eine schematische perspektivische Ansicht einer Ausführungsform eines Packungsblechs für eine Packung der Stoffaustauschkolonne gemäß Fig. 1;
Fig. 3 zeigt eine schematische perspektivische Ansicht einer Ausführungsform eines Umformwerkzeugs zum Herstellen eines Packungsblechs gemäß Fig. 2;
Fig. 4 zeigt eine schematische Ansicht einer Ausführungsform einer Packungsblechbiegevorrichtung zum Herstellen eines Packungsblechs gemäß Fig. 2;
Fig. 5 zeigt eine weitere schematische Ansicht der Packungsblechbiegevorrichtung gemäß Fig. 4;
Fig. 6 zeigt eine weitere schematische Ansicht der Packungsblechbiegevorrichtung gemäß Fig. 4;
Fig. 7 zeigt eine weitere schematische Ansicht der Packungsblechbiegevorrichtung gemäß Fig. 4;
Fig. 8 zeigt eine schematische perspektivische Ansicht einer Ausführungsform einer Antriebseinrichtung für die Packungsblechbiegevorrichtung gemäß Fig. 4;
Fig. 9 zeigt eine weitere schematische perspektivische Ansicht der Antriebseinrichtung gemäß Fig. 8;
Fig. 10 zeigt eine schematische perspektivische Ansicht der Packungsblechbiegevorrichtung gemäß Fig. 4;
Fig. 11 zeigt eine schematische perspektivische Ansicht einer weiteren Ausführungsform einer Packungsblechbiegevorrichtung zum Herstellen eines Packungsblechs gemäß Fig. 2;
Fig. 12 zeigt eine weitere schematische perspektivische Ansicht der Packungsblechbiegevorrichtung gemäß Fig. 11;
Fig. 13 zeigt eine schematische perspektivische Ansicht einer weiteren Ausführungsform einer Packungsblechbiegevorrichtung zum Herstellen eines Packungsblechs gemäß Fig. 2; und
Fig. 14 zeigt eine schematische perspektivische Ansicht einer weiteren Ausführungsform einer Packungsblechbiegevorrichtung zum Herstellen eines Packungsblechs gemäß Fig. 2.

In den Figuren sind gleiche oder funktionsgleiche Elemente mit denselben Bezugszeichen versehen wurden, sofern nichts anderes angegeben ist.

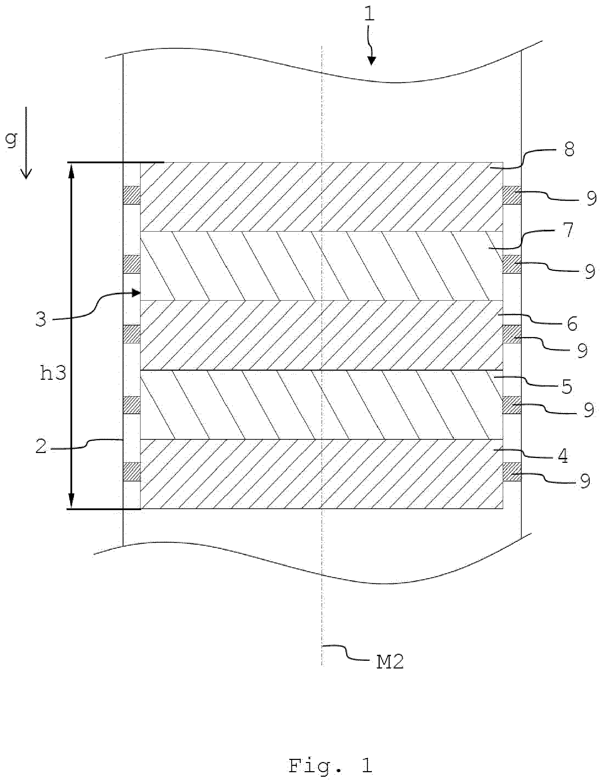

Die Fig. 1 zeigt eine stark vereinfachte schematische Schnittansicht einer Ausführungsform einer Stoffaustauschkolonne 1. Die Stoffaustauschkolonne 1 kann eine Rektifikations- oder Luftzerlegungssäule sein. Unter Rektifikation ist ein thermisches Trennverfahren zu verstehen, das eine Erweiterung der Destillation oder eine Hintereinanderschaltung vieler Destillationsschritte darstellt. Gegenüber der Destillation sind die Vorteile der Rektifikation, dass die Stoffaustauschkolonne 1 kontinuierlich betrieben werden kann und dass der Trenneffekt im Vergleich zur Destillation um ein Vielfaches höher ist, da der Dampf im Gegenstrom mit der Flüssigkeit mehrfach hintereinander in Kontakt steht. Die Stoffaustauschkolonne 1 arbeitet somit energetisch günstiger, technisch weniger aufwendig und platzsparender als eine Hintereinanderschaltung von Einzelfachdestillationen.

Die Stoffaustauschkolonne 1 umfasst einen Behälter 2, der eine zylinderförmige Geometrie aufweist. Der Behälter 2 kann beispielsweise aus einem Aluminiumwerkstoff oder einem Stahlwerkstoff gefertigt sein. Vorzugsweise ist der Behälter 2 aus einem Aluminiumwerkstoff gefertigt. Der Behälter 2 ist zylinderförmig um eine Symmetrie-oder Mittelachse M2 aufgebaut. Der Behälter 2 kann beispielsweise eine Höhe von 30.000 bis 50.000 Millimeter aufweisen. Der Behälter 2 kann einen kreisrunden oder annähernd kreisrunden, beispielsweise einen ovalen, Querschnitt aufweisen. Der Behälter 2 ist vorzugsweise aus einer Vielzahl Behälterabschnitte oder Mantelabschnitte aufgebaut, die stoffschlüssig miteinander verbunden sind. Die Behälterabschnitte können auch als Behältersektionen, Mantelsektionen oder Mantelschüsse bezeichnet werden. Die Mittelachse M2 ist in der Orientierung der Fig. 1 vertikal, das heißt, in einer Schwerkraftrichtung g angeordnet.

In dem Behälter 2 ist eine Vielzahl übereinandergestapelter Packungen 3 angeordnet, von denen in der Fig. 1 jedoch lediglich eine gezeigt ist. Die Packung 3 ist eine sogenannte geordnete oder strukturierte Packung. Bei derartigen geordneten Packungen 3 werden, im Gegensatz zu ungeordneten Packungen, Metallgewebe oder Metallbleche so gefaltet und/oder gewickelt, dass es zu einer intensiven Lenkung des Dampfes und der Flüssigkeit und damit verbundenem intensiven Kontakt beider kommt. Durch eine weitere Strukturierung der Oberfläche und durch die Anbringung von Löchern werden sowohl die Benetzbarkeit der Packungsoberfläche als auch der Stoffaustausch weiter erhöht. Die Packung 3 kann eine Vielzahl geordneter oder strukturierter Packungsscheiben 4 bis 8 aufweisen, die übereinander angeordnet sind. Die Packungsscheiben 4 bis 8 können auch als Packungslagen oder Packungsschichten bezeichnet werden. Derartige Packungsscheiben 4 bis 8 bestehen aus dünnen, gewellten und/oder gelochten Metallplatten beziehungsweise Drahtnetzen. Das Design der Packungsscheiben 4 bis 8 gewährleistet einen optimalen Austausch zwischen den unterschiedlichen Phasen (flüssig/gasförmig beziehungsweise flüssig/flüssig) bei minimalem Druckwiderstand. Die Anzahl der Packungsscheiben 4 bis 8 pro Packung 3 ist beliebig.

Die Packungsscheiben 4 bis 8 können aus senkrecht angeordneten Packungsblechen, insbesondere aus gewellten Aluminiumblechen, gefertigt sein. Die Packungsscheiben 4 bis 8 bilden aufgrund ihrer Struktur Kondensationsoberflächen, an denen beispielsweise bei der Luftzerlegung Luftbestandteile kondensieren können. Beispielsweise können die verwendeten Packungsbleche eine Dicke von 0,1 Millimeter aufweisen. Jede Packungsscheibe 4 bis 8 kann beispielsweise eine Dicke von 200 bis 500 Millimeter aufweisen. Die Packung 3 kann so eine Höhe h3 von beispielsweise 1.000 bis 7.000 Millimeter aufweisen. Zwischen dem Behälter 2 und der Packung 3 beziehungsweise zwischen dem Behälter 2 und jeder Packungsscheibe 4 bis 8 kann noch ein umlaufender Packungskragen oder Dichtkragen 9 vorgesehen sein. Der Dichtkragen 9 ist optional und somit verzichtbar.

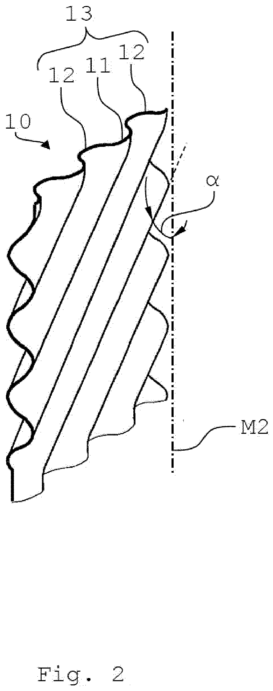

Die Fig. 2 zeigt eine schematische perspektivische Ansicht eines Teils einer Ausführungsform eines Packungsblechs 10, aus einer Vielzahl dessen die Packungsscheiben 4 bis 8 jeweils aufgebaut sind. Wie die Fig. 2 zeigt, weist das Packungsblech 10 eine gewellte Form mit Wellenbergen 11 und Wellentälern 12 auf. Die Wellenberge 11 und die Wellentäler 12 sind so angeordnet, dass jeweils ein Wellenberg 11 zwischen zwei Wellentälern 12 und ein Wellental 12 zwischen zwei Wellenbergen 11 angeordnet ist. Die Wellenberge 11 und die Wellentäler 12 bilden Wellen 13 des Packungsblechs 10. Zusätzlich kann das Packungsblech 10 Riffelungen, Lochungen, Bohrung und/oder Durchbrüche aufweisen. Das Packungsblech 10 ist vorzugsweise aus einem Aluminiumwerkstoff gebildet und kann, wie bereits zuvor erwähnt, eine Dicke von 0,1 Millimeter aufweisen.

Zum Herstellen einer Packungsscheibe 4 bis 8 wird eine Vielzahl derartiger Packungsbleche 10 aufeinandergestapelt. Wie der Fig. 2 weiter zu entnehmen ist, verlaufen die Wellenberge 11 und die Wellentäler 12 in einem Winkel α zu der Mittelachse M2. Der Winkel α beträgt beispielsweise 45°. Benachbarte Packungsbleche 10 können so angeordnet sein, dass sich die Wellenberge 11 und die Wellentäler 12, insbesondere in einem Winkel von 90°, kreuzen.

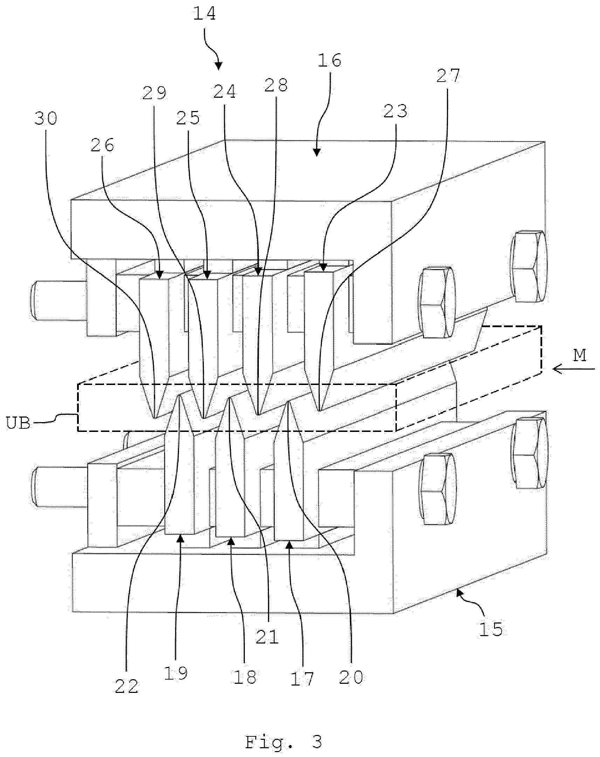

Zum Herstellen eines derartigen Packungsblechs 10 kann ein in der Fig. 3 gezeigtes Umformwerkzeug 14 verwendet werden. Das Umformwerkzeug 14 weist eine untere oder erste Werkzeughälfte 15 sowie eine obere oder zweite Werkzeughälfte 16 auf. Der ersten Werkzeughälfte 15 ist eine Vielzahl Biegeleisten 17 bis 19 zugeordnet, wobei jede Biegeleiste 17 bis 19 wiederum eine Biegekante 20 bis 22 umfasst. Die Anzahl der Biegeleisten 17 bis 19 ist beliebig. Beispielsweise sind drei Biegeleisten 17 bis 19 vorgesehen. Der zweiten Werkzeughälfte 16 ist ebenfalls eine Vielzahl an Biegeleisten 23 bis 26 zugeordnet. Die Anzahl der Biegeleisten 23 bis 26 ist beliebig. Beispielsweise sind vier Biegeleisten 23 bis 26 vorgesehen. Jeder Biegeleiste 23 bis 26 ist wiederum eine Biegekante 27 bis 30 zugeordnet.

Die Biegeleisten 17 bis 19, 23 bis 26 sind so angeordnet, dass jeweils eine Biegeleiste 17 bis 19 der ersten Werkzeughälfte 15 zwischen zwei Biegeleisten 23 bis 26 der zweiten Werkzeughälfte 16 und umgekehrt angeordnet ist. Die Biegekanten 20 bis 22, 27 bis 30 einer Werkzeughälfte 15, 16 ragen unterschiedlich weit in einen Umformbereich UB des Umformwerkzeugs 14 hinein. Zum Herstellen des gewellten Packungsblechs 10 wird ein unverformtes Packungsblech, das beispielsweise als Endlosband, insbesondere als sogenanntes Coil, vorliegen kann, in einer Maschinenrichtung M durch das sich öffnende und schließende Umformwerkzeug 14 hindurchgefördert, wobei mit Hilfe der unterschiedlich weit in den Umformbereich UB des Umformwerkzeugs 14 hineinragenden Biegekanten 20 bis 22, 27 bis 30 die Wellen 13 stufenweise an das unverformte Packungsblech angeformt werden. Unter einer stufenweisen Anformung ist zu verstehen, dass die Wellen 13 schrittweise vertieft werden, bis eine gewünschte Tiefe der Wellen 13 erreicht ist.

Zum Anformen der Wellen 13 an das Packungsblech 10 ist es vorteilhaft, wenn die erste Werkzeughälfte 15 und die zweite Werkzeughälfte 16 sowohl gegensinnig und senkrecht auf die Maschinenrichtung M zu als auch parallel und gleichsinnig zu der Maschinenrichtung M bewegt werden. Das heißt, beim Schließen des Umformwerkzeugs 14 bewegen sich die Werkzeughälften 15, 16 aufeinander zu und sowohl senkrecht als auch parallel zu der Maschinenrichtung M. Beim Öffnen des Umformwerkzeugs 14 bewegen sich die Werkzeughälften 15, 16 voneinander weg und sowohl senkrecht als auch parallel zu der Maschinenrichtung M.

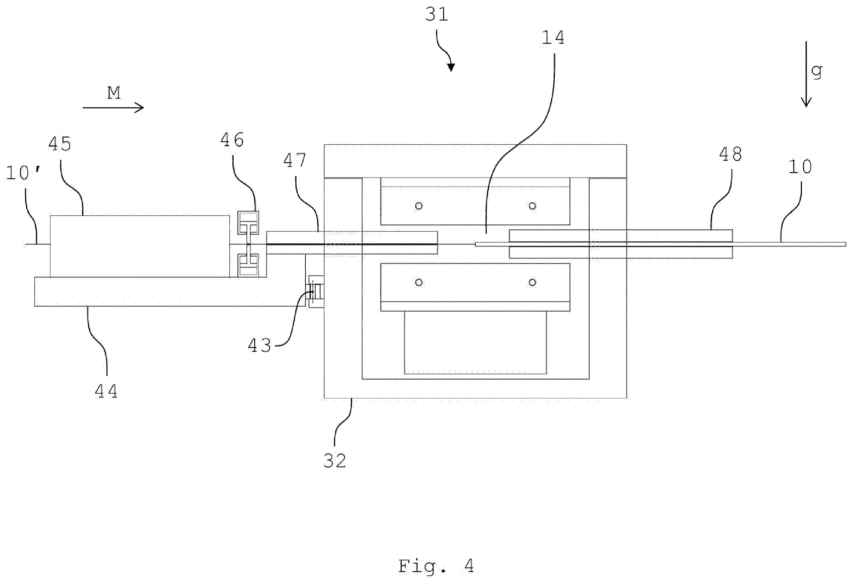

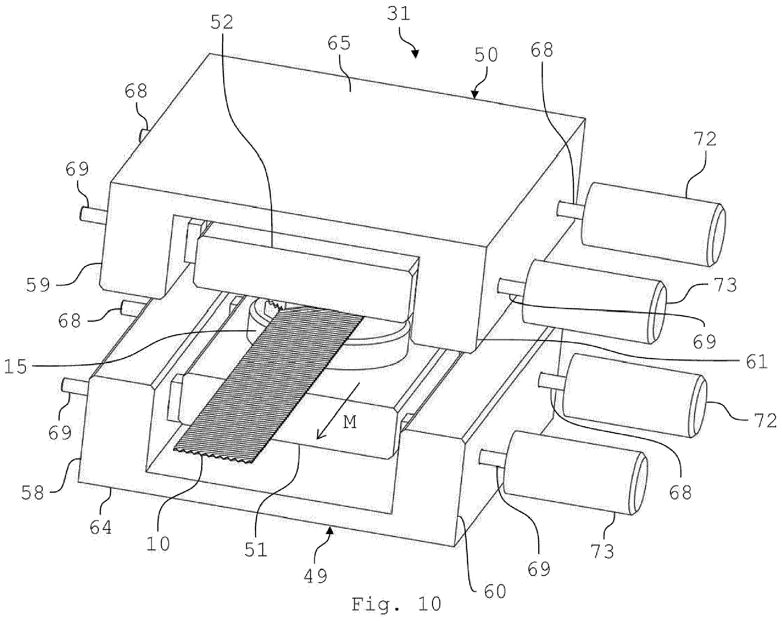

Das Umformwerkzeug 14 ist einer in den Fig. 4 bis 7 und 10 gezeigten Packungsblechbiegevorrichtung 31 zum Herstellen eines derartigen Packungsblechs 10 zugeordnet. Mit Hilfe der Packungsblechbiegevorrichtung 31 wird ein unverformtes Packungsblech 10', das beispielsweise als Endlosband vorliegt, in das gewellte Packungsblech 10 umgeformt. Die Packungsblechbiegevorrichtung 31 umfasst eine Rahmeneinrichtung 32, in der das Umformwerkzeug 14 aufgenommen ist. Die Rahmeneinrichtung 32 umfasst ein erstes Rahmenelement 33 sowie ein zweites Rahmenelement 34, das mit Hilfe einer Schwenkachse 35 verschwenkbar an dem ersten Rahmenelement 33 gelagert ist. Das erste Rahmenelement 33 ist im Querschnitt U-förmig und das zweite Rahmenelement 34 ist im Querschnitt L-förmig.

Dem ersten Rahmenelement 33 ist ein Verriegelungselement 36 zugeordnet. Das Verriegelungselement 36 kann beispielsweise einen Hydraulik- oder Pneumatikzylinder umfassen, der dazu eingerichtet ist, einen Eingriffsabschnitt 37 zu verlagern. Der Eingriffsabschnitt 37 ist dazu eingerichtet, in einen korrespondierenden Gegeneingriffsabschnitt 38 des zweiten Rahmenelements 34 formschlüssig einzugreifen. Eine formschlüssige Verbindung entsteht durch das Ineinander- oder Hintergreifen von mindestens zwei Verbindungspartnern, in diesem Fall dem Eingriffsabschnitt 37 und dem Gegeneingriffsabschnitt 38.

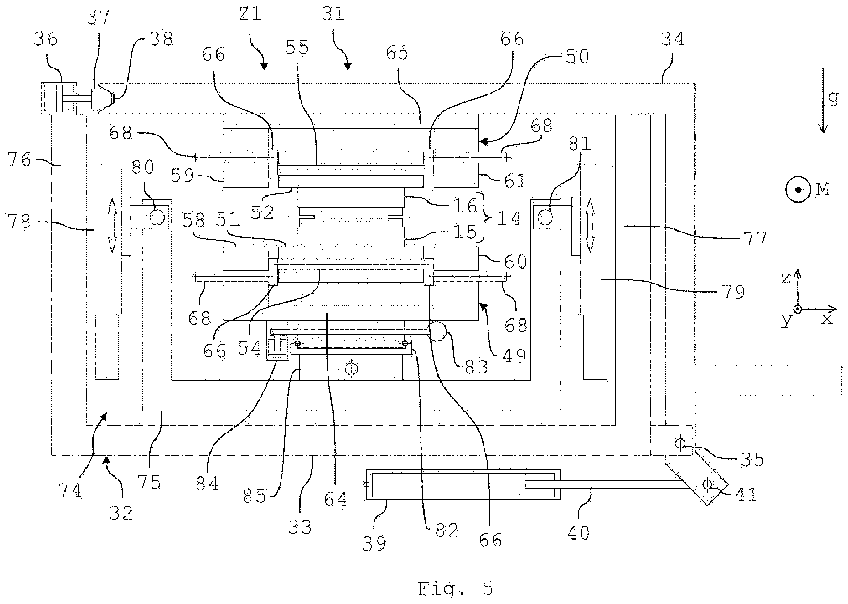

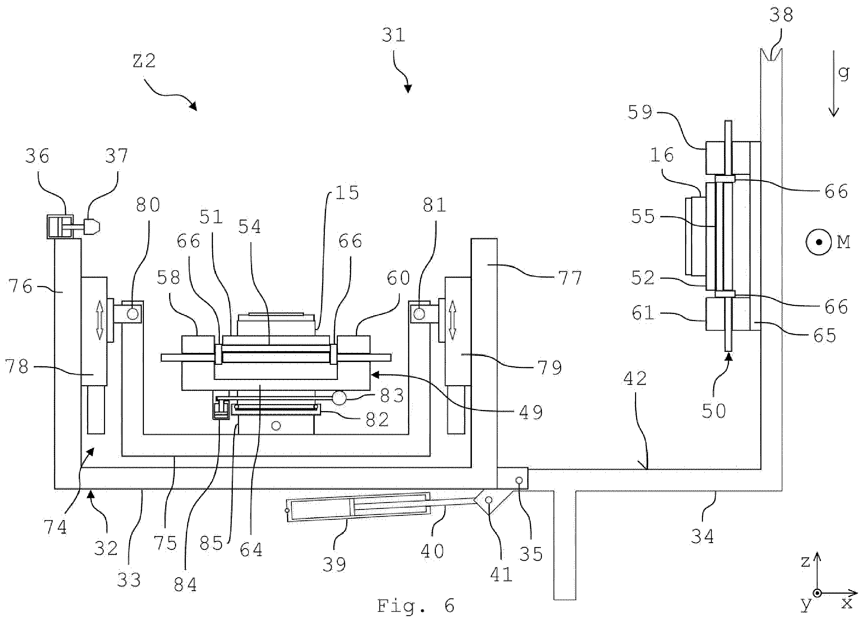

Die Rahmeneinrichtung 32 umfasst weiterhin ein Antriebselement 39. Das Antriebselement 39 kann beispielsweise elektrisch, pneumatisch oder hydraulisch angetrieben sein. Ein Zylinder 40 des Antriebselements 39 ist mit Hilfe einer Schwenkachse 41 an dem zweiten Rahmenelement 34 gelagert. Mit Hilfe des Antriebselements 39 ist die Rahmeneinrichtung 32 von einem in der Fig. 5 gezeigten geschlossenen Zustand Z1, in dem der Eingriffsabschnitt 37 des Verriegelungselements 36 formschlüssig in den Gegeneingriffsabschnitt 38 des zweiten Rahmenelements 34 eingreift, in einen in der Fig. 6 gezeigten geöffneten Zustand Z2, in dem der Eingriffsabschnitt 37 des Verriegelungselements 36 außer formschlüssigem Eingriff mit dem Gegeneingriffsabschnitt 38 des zweiten Rahmenelements 34 ist, verbringbar.

Zum Verbringen der Rahmeneinrichtung 32 von dem geschlossenen Zustand Z1 in den geöffneten Zustand Z2 wird zunächst der Eingriffsabschnitt 37 des Verriegelungselements 36 außer formschlüssigem Eingriff mit dem Gegeneingriffsabschnitt 38 des zweiten Rahmenelements 34 gebracht. Anschließend wird das zweite Rahmenelement 34 mit Hilfe des Antriebselements 39 um die Schwenkachse 35 verschwenkt. Vorzugsweise wird das zweite Rahmenelement 34 um einen Winkel von 90° verschwenkt. Eine Fläche 42 des zweiten Rahmenelements 34 kann als Arbeitsbühne für einen Benutzer verwendet werden.

Wie die Fig. 4 zeigt, ist an der Rahmeneinrichtung 32 mit Hilfe einer Schwenkachse 43 eine weitere Rahmeneinrichtung 44 verschwenkbar gelagert. Die Rahmeneinrichtung 44 trägt eine Vorschubeinrichtung oder Transporteinrichtung 45 zum Transportieren des unverformten Packungsblech 10' in der Maschinenrichtung M. Die Transporteinrichtung 45 ist in der Maschinenrichtung M dem Umformwerkzeug 14 vorgelagert. Der Transporteinrichtung 45 nachgelagert kann eine Bremseinrichtung 46 an der Rahmeneinrichtung 44 angeordnet sein. Die Transporteinrichtung 45 kann ein mechanischer Rollen- oder Bandvorschub sein. Alternativ kann die Transporteinrichtung 45 ein berührungsloser Blechvorschub, der auf dem Wirbelstromprinzip arbeitet, sein. Die Transporteinrichtung 45 umfasst vorzugsweise eine eigene Messeinrichtung zum Erfassen einer Lage des Packungsblechs 10'. Die Bewegung des Packungsblechs 10' durch das Umformwerkzeug 14 kann dadurch festgestellt werden. Mit Hilfe einer Regel- und Steuereinheit kann dann eine notwendige ergänzende Vorschubbewegung durchgeführt werden.

Zusätzlich kann zur Bewegungssteuerung des Packungsblechs 10' die Bremseinrichtung 46 vorgesehen sein. Eine Bremskraft der Bremseinrichtung 46 kann elektrisch, pneumatisch oder hydraulisch aufgebracht werden. Mit Hilfe einer separaten Regel- und Steuereinheit kann der richtige Bremspunkt ermittelt werden, so dass das Packungsblech 10' exakt in der richtigen Lage für die nächste Umformsequenz zum Stehen kommt. Mit Hilfe einer ebenfalls an der Rahmeneinrichtung 44 vorgesehenen Führungseinrichtung 47 kann das Packungsblech 10' seitlich und von oben und unten ausreichend geführt sein.

Dadurch, dass die Rahmeneinrichtung 44 mit Hilfe der Schwenkachse 43 verschwenkbar an der Rahmeneinrichtung 32 gelagert ist, kann ein Einlaufwinkel des Packungsblechs 10' in das Umformwerkzeug 14 verändert werden. In der Maschinenrichtung M kann dem Umformwerkzeug 14 eine weitere Führungseinrichtung 48 nachgeordnet sein. Mit Hilfe der Führungseinrichtung 48 kann das umgeformte Packungsblech 10 aus der Packungsblechbiegevorrichtung 31 herausgeführt werden.

Zum Antreiben des Umformwerkzeugs 14 beziehungsweise zum Bewegen der ersten Werkzeughälfte 15 und der zweiten Werkzeughälfte 16 können eine erste Antriebseinrichtung 49 sowie eine zweite Antriebseinrichtung 50 vorgesehen sein. Die erste Antriebseinrichtung 49 ist dabei der ersten Werkzeughälfte 15 zugeordnet und die zweite Antriebseinrichtung 50 ist der zweiten Werkzeughälfte 16 zugeordnet. Jede Antriebseinrichtung 49, 50 umfasst einen Werkzeugträger 51, 52, der dazu eingerichtet ist, eine der Werkzeughälften 15, 16 zu tragen. Insbesondere sind ein erster Werkzeugträger 49 und ein zweiter Werkzeugträger 52 vorgesehen. Die Werkzeugträger 51, 52 sind plattenförmig und können einen Befestigungsabschnitt 53 aufweisen, an dem eine der Werkzeughälften 15, 16 befestigbar, beispielsweise anschraubbar, ist. Der Befestigungsabschnitt 53 kann beispielsweise als Drehteller ausgebildet sein. Der Befestigungsabschnitt 53 ermöglicht eine horizontale Drehverstellung der jeweiligen Werkzeughälfte 15, 16. Mit Hilfe von Bohrungen und Rastbolzen oder durch Klemmungen kann der Befestigungsabschnitt 53 in einer gewünschten Drehwinkelposition fixiert werden. Die jeweilige Werkzeughälfte 15, 16 kann dadurch beispielsweise schräggestellt werden, um schräg gewellte Packungsbleche 10 zu fertigen.

Jeder Werkzeugträger 51, 52 umfasst eine erste Exzenterachse 54, 55 und eine parallel zu der ersten Exzenterachse 54, 55 und beabstandet zu dieser angeordnete zweite Exzenterachse 56, 57. Die Exzenterachsen 54 bis 57 sind in den jeweiligen Werkzeugträgern 51, 52 drehfest gelagert. Das heißt, die Exzenterachsen 54 bis 57 können sich gegenüber dem jeweiligen Werkzeugträger 51, 52 nicht verdrehen. Die Exzenterachsen 54 bis 57 sind in jeweiligen in dem entsprechenden Werkzeugträger 51, 52 vorgesehenen Bohrungen aufgenommen. Jeder Exzenterachse 54 bis 57 ist dabei eine derartige Bohrung zugeordnet. Die Exzenterachsen 54 bis 57 sind so durch die Bohrungen hindurchgeführt, dass diese beidseitig aus dem jeweiligen Werkzeugträger 51, 52 herausragen.

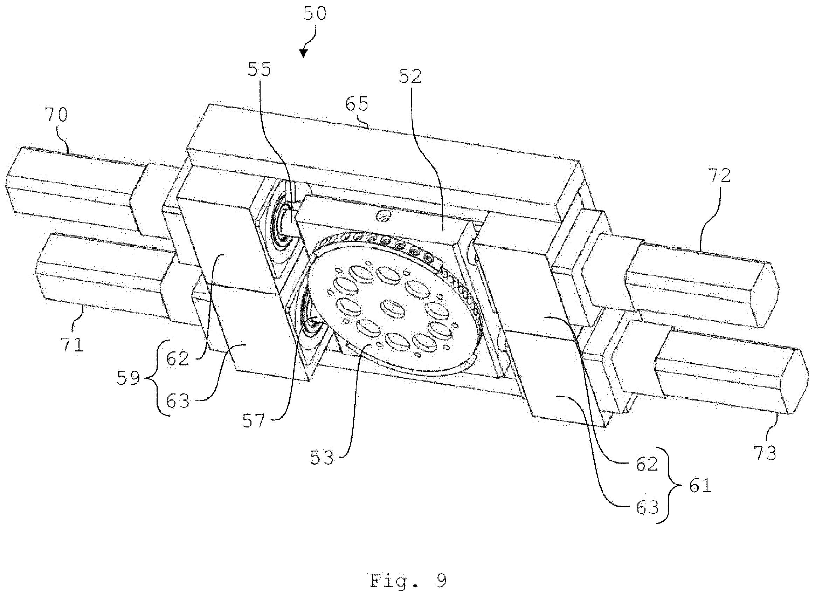

Jede Antriebseinrichtung 49, 50 umfasst weiterhin einen ersten Lagerblock 58, 59 sowie einen zweiten Lagerblock 60, 61. Der erste Werkzeugträger 51 ist zwischen den Lagerblöcken 58, 60 und der zweite Werkzeugträger 52 ist zwischen den Lagerblöcken 59, 61 angeordnet. Die Lagerblöcke 58 bis 61 können jeweils aus Lagerblockabschnitten 62, 63 (Fig. 9) aufgebaut sein. Die Lagerblockabschnitte 62, 63 können fest miteinander verbunden sein. Alternativ können die Lagerblöcke 58 bis 61 auch einteilig ausgebildet sein. Die Lagerblöcke 58, 60 der ersten Antriebseinrichtung 49 können mit Hilfe einer Verbindungsplatte 64 und die Lagerblöcke 59, 61 der zweiten Antriebseinrichtung 50 können mit Hilfe einer Verbindungsplatte 65 fest miteinander verbunden sein. Beispielsweise ist die Verbindungsplatte 64 mit den Lagerblöcken 58, 60 verschraubt und die Verbindungsplatte 65 ist mit den Lagerblöcken 59, 61 verschraubt. Die ersten Lagerblöcke 58, 59 und die zweiten Lagerblöcke 60, 61 können identisch, jedoch spiegelsymmetrisch ausgebildet sein.

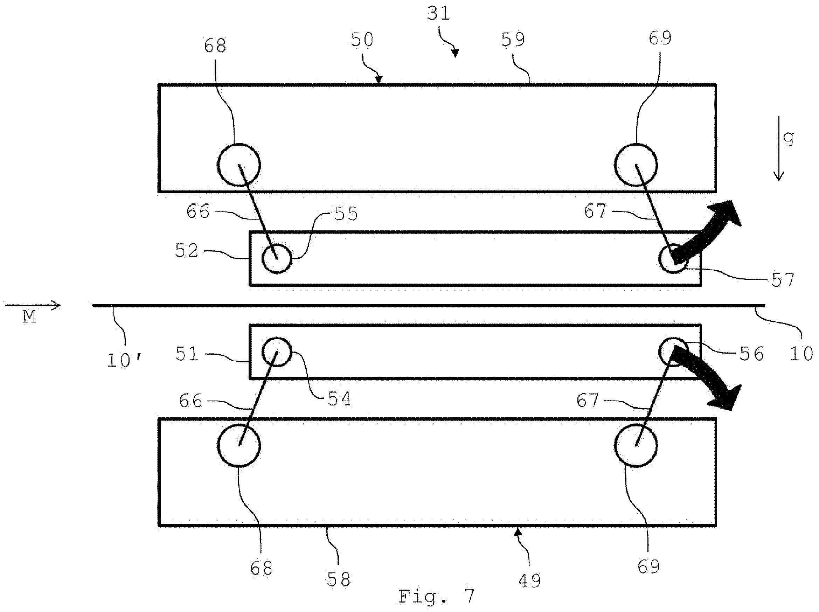

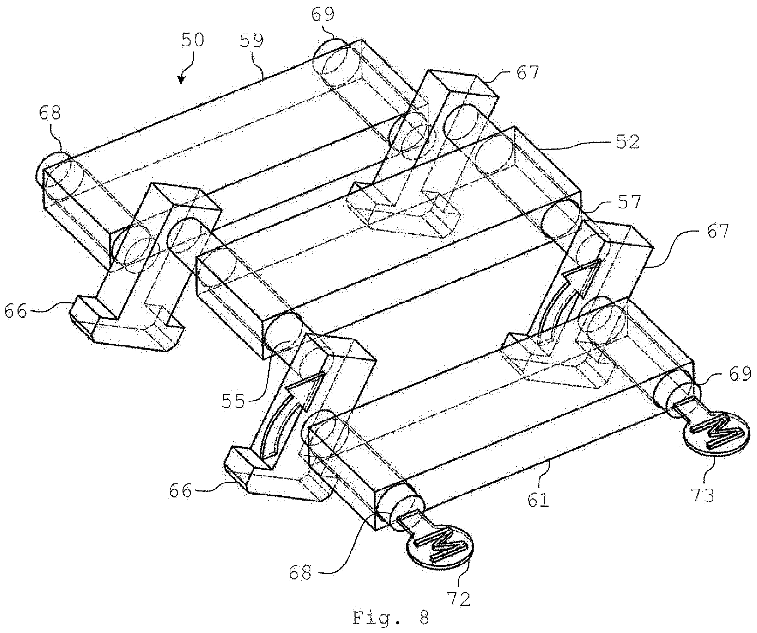

Jedem Lagerblock 58 bis 61 ist, wie in den Fig. 7 und 8 gezeigt, ein erster Exzenterkörper 66, in oder an dem die erste Exzenterachse 54, 55 jeweils drehbar gelagert ist, sowie ein zweiter Exzenterkörper 67 zugeordnet, in oder an dem die zweite Exzenterachse 56, 57 jeweils drehbar gelagert ist. Jedem Exzenterkörper 66, 67 ist eine Antriebswelle 68, 69 zugeordnet, die in dem jeweiligen Lagerblock 58 bis 61 drehbar gelagert ist. Jeder Antriebswelle 68, 69 kann ein Antriebselement 70 bis 73 zugeordnet sein. Das Antriebselement 70 bis 73 kann beispielsweise ein Elektromotor, ein hydraulischer oder ein pneumatischer Antrieb sein. Vorzugsweise sind die Antriebselemente 70 bis 73 synchronisiert. Alternativ kann auch nur ein Antriebselement 70 bis 73 oder zwei Antriebselemente 70 bis 73 vorgesehen sein, wobei dabei dann die synchronisierte Bewegung der Antriebswellen 68, 69 beispielsweise über ein Getriebe oder über einen Riemenantrieb erfolgen kann.

Die Packungsblechbiegevorrichtung 31 umfasst weiterhin eine Positioniereinrichtung 74 zum Positionieren der ersten Werkzeughälfte 15 relativ zu der zweiten Werkzeughälfte 16. Die Positioniereinrichtung 74 umfasst einen Positionierrahmen 75, der im Querschnitt U-förmig ist. Der Positionierrahmen 75 trägt die erste Antriebseinrichtung 49 mit der ersten Werkzeughälfte 15. An zwei gegenüberliegenden Seitenwänden 76, 77 des ersten Rahmenelements 33 der Rahmeneinrichtung 32 sind ein erstes Linearmodul 78 sowie ein zweites Linearmodul 79 vorgesehen, die über Schwenkachsen 80, 81 mit dem Positionierrahmen 75 verbunden sind. Mit Hilfe der Linearmodule 78, 79 ist der Positionierrahmen 75 in einer dritten Raumrichtung oder z-Richtung z verstellbar und um eine zweite Raumrichtung oder y-Richtung y verkippbar. Der Positionierrahmen 75 und die erste Werkzeughälfte 15 können mit Hilfe einer gleichmäßigen und gleichzeitigen Bewegung der Linearmodule 78, 79 in der z-Richtung z angehoben und abgesenkt werden. Durch eine unterschiedliche Bewegung der beiden Linearmodule 78, 79 kann die erste Werkzeughälfte 15 gegenüber der zweiten Werkzeughälfte 16 um die y-Richtung y verkippt werden.

Ein derartiges Linearmodul 78, 79 umfasst bevorzugt ein Führungselement, das eine Verschiebung einer Komponente in einer linearen Weise zulässt, ein Antriebselement, das elektrisch, pneumatisch oder manuell angetrieben werden kann, sowie Klemmelemente zum Klemmen dieser Bewegungsmöglichkeit. Die Klemmelemente können elektrisch, pneumatisch oder manuell sein. Weiterhin umfasst ein derartiges Linearmodul 78, 79 noch eine Lagesensorik und eine Steuerung.

Zwischen dem Positionierrahmen 75 und der Antriebseinrichtung 49 und insbesondere der Verbindungsplatte 64 der Antriebseinrichtung 49 ist ein Drehmodul 82 vorgesehen, das eine Rotationsbewegung der ersten Werkzeughälfte 15 um eine dritte Raumrichtung oder z-Richtung z ermöglicht. Mit Hilfe des Drehmoduls 82 kann somit die erste Werkzeughälfte 15 gegenüber der zweiten Werkzeughälfte 16 verdreht werden. Das Drehmodul 82 kann mit Hilfe eines Antriebselements 83 eine Winkellage der ersten Werkzeughälfte 15 in Bezug auf die zweite Werkzeughälfte 16 einstellen. Die gewünschte Drehwinkelposition kann mit Hilfe eines Klemmelements 84 fixiert werden.

Das Drehmodul 82 ist wiederum auf einem Linearmodul 85 befestigt. Mit Hilfe des Linearmoduls 85 kann eine horizontale Lage der ersten Werkzeughälfte 15 gegenüber der zweiten Werkzeughälfte 16 verstellt werden. Insbesondere kann mit Hilfe des Linearmoduls 85 die erste Werkzeughälfte 15 in der y-Richtung y bewegt werden. Mit Hilfe der Linearmodule 78, 79, 85 sowie dem Drehmodul 82 ist die erste Werkzeughälfte 15 frei gegenüber der zweiten Werkzeughälfte 16 positionierbar.

Die Packungsblechbiegevorrichtung 31 ermöglicht hohe Werkzeughubzahlen bei relativ großem Werkzeughub. Das Umformwerkzeug 14 öffnet sich symmetrisch zu einer Blechbandebene. Hierdurch wird das Packungsblech 10' beim Eindringen der Werkzeughälften 15, 16 nicht senkrecht zur Blechbandebene bewegt. Dies ist wiederum von Vorteil bei sehr hohen Hubzahlen, da das Packungsblech 10' nicht zum Schwingen angeregt wird. Durch Messsysteme kann das Produkt kontinuierlich vermessen werden und die erste Werkzeughälfte 15 entsprechend der daraus resultierenden Erfordernisse verstellt werden. Durch die aufklappbare Rahmeneinrichtung 32 ist die Packungsblechbiegevorrichtung 31 zur Wartung optimal zugänglich.

Mit Hilfe der rotatorischen Bewegung der Werkzeughälften 15, 16 wird zum einen das Packungsblech 10' senkrecht zu einer Symmetrieebene verformt und zum anderen parallel zu der Maschinenrichtung M entsprechend einer hohen horizontalen Komponente eines Bewegungsvektors der Werkzeughälften 15, 16 bewegt. Zusätzlich kann das Packungsblech mit Hilfe der Transporteinrichtung 45 in der Maschinenrichtung M bewegt werden.

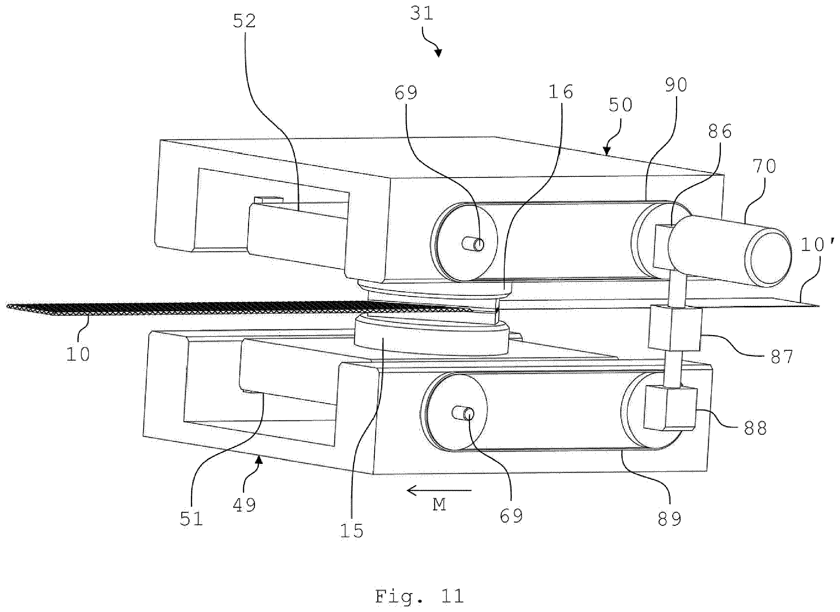

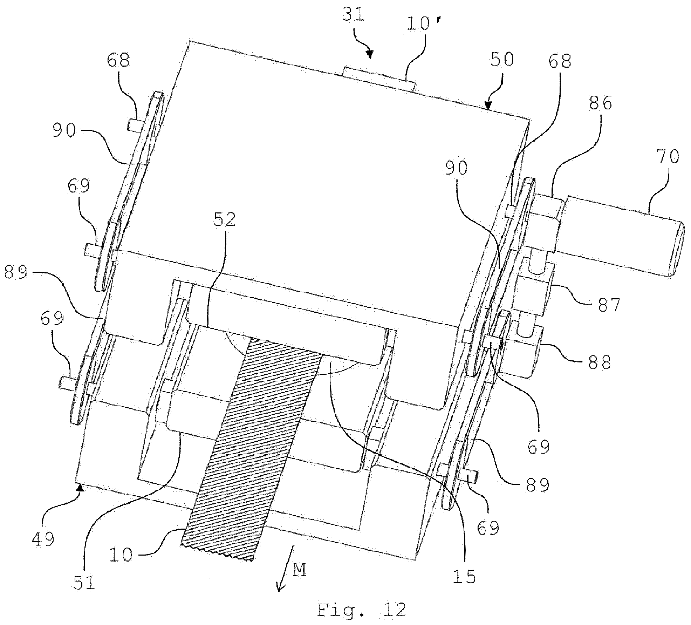

Die Fig. 11 und 12 zeigen jeweils eine schematische perspektivische Ansicht einer weiteren Ausführungsform einer Packungsblechbiegevorrichtung 31. Bei dieser Ausführungsform der Packungsblechbiegevorrichtung 31 sind die Antriebswellen 68, 69 mit Hilfe eines einzigen Antriebselements 70 angetrieben. Dabei wird ein Teil des Drehmoments des Antriebselements 70 zunächst über ein T-Getriebe 86 von der zweiten Antriebseinrichtung 50 auf die erste Antriebseinrichtung 49 nach unten abgeleitet. Über ein Kupplungselement 87, das sich beim Öffnen der Rahmeneinrichtung 32 trennt, und über ein Winkelgetriebe 88 wird das Drehmoment auf die Antriebswellen 68, 69 der ersten Antriebseinrichtung 49 übertragen. Die beiden Antriebswellen 68, 69 der ersten Antriebseinrichtung 49 und die beiden Antriebswellen 68, 69 der zweiten Antriebseinrichtung 50 sind jeweils über einen Riemen- oder Kettenantrieb 89, 90 miteinander verbunden. Auch ein Zahnradgetriebe ist einsetzbar. Hierdurch kann auf eine elektronische Synchronisierung verzichtet werden. Hierdurch sind besonders hohe Drehzahlen des Antriebselements 70 erreichbar.

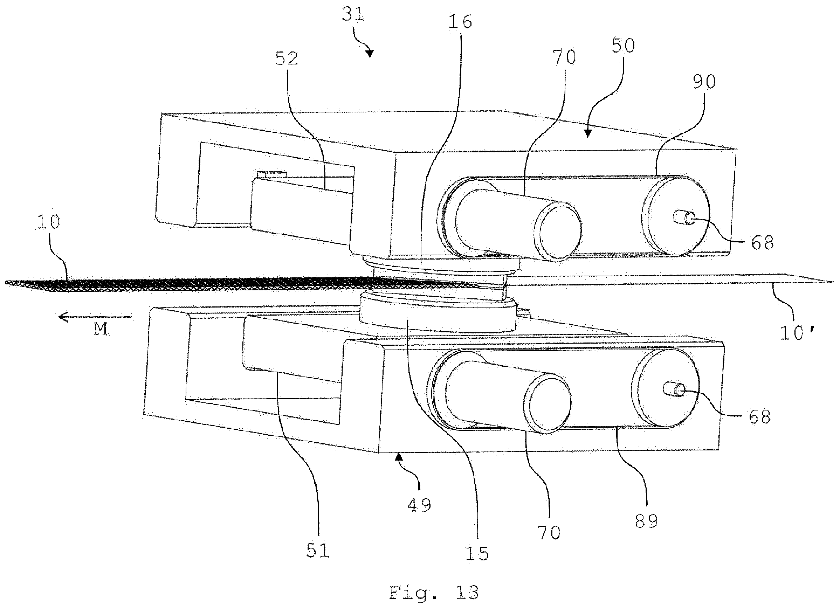

Die Fig. 13 zeigt eine schematische perspektivische Ansicht einer weiteren Ausführungsform einer Packungsblechbiegevorrichtung 31. Bei dieser Ausführungsform der Packungsblechbiegevorrichtung 31 ist jeder Antriebseinrichtung 49, 50 ein eigenes Antriebselement 70 zugeordnet. Antriebswellen der beiden Antriebselemente 70 können über eine Regelung stets winkelsynchron gehalten werden. Die Antriebswellen 68, 69 sind jeweils mit Hilfe eines Riemen- oder Kettenantriebs 89, 90 miteinander gekoppelt.

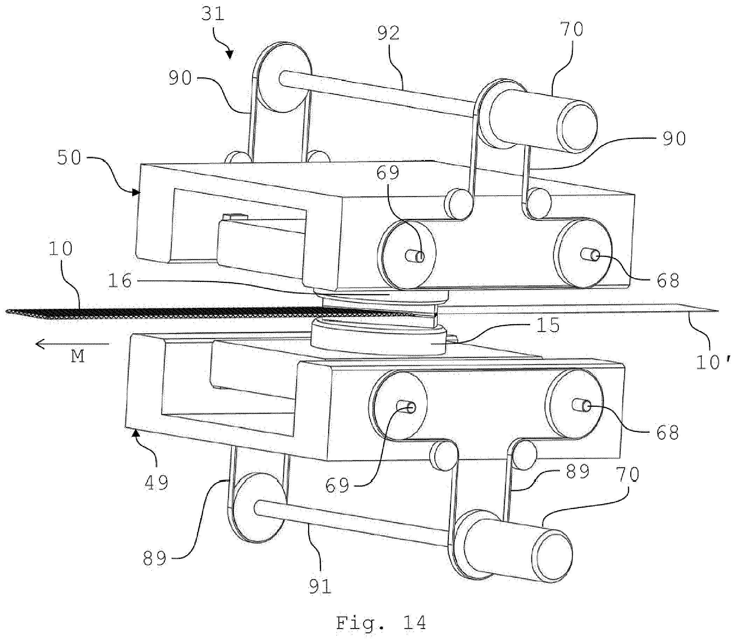

Die Fig. 14 zeigt eine schematische perspektivische Ansicht einer weiteren Ausführungsform einer Packungsblechbiegevorrichtung 31. Bei dieser Ausführungsform der Packungsblechbiegevorrichtung 31 ist ebenfalls jeder Antriebseinrichtung 49, 50 ein eigenes Antriebselement 70 zugeordnet, wobei mit Hilfe einer jeweiligen Verbindungswelle 91, 92 die gegenüberliegenden Antriebswellen 68, 69 angetrieben werden. Hierdurch werden Verwindungen in den Antriebswellen 68, 69 reduziert. Die Antriebswellen 68, 69 sind jeweils über einen Riemen- oder Kettenantrieb 89, 90 miteinander gekoppelt.

Obwohl die vorliegende Erfindung anhand von Ausführungsbeispielen vollständig beschrieben wurde, ist sie vielfältig modifizierbar.

### Verwendete Bezugszeichen

- 1: Stoffaustauschkolonne
- 2: Behälter
- 3: Packung
- 4: Packungsscheibe
- 5: Packungsscheibe
- 6: Packungsscheibe
- 7: Packungsscheibe
- 8: Packungsscheibe
- 9: Dichtkragen
- 10: Packungsblech
- 10': Packungsblech
- 11: Wellenberg
- 12: Wellental
- 13: Welle
- 14: Umformwerkzeug
- 15: Werkzeughälfte
- 16: Werkzeughälfte
- 17: Biegeleiste
- 18: Biegeleiste
- 19: Biegeleiste
- 20: Biegekante
- 21: Biegekante
- 22: Biegekante
- 23: Biegeleiste
- 24: Biegeleiste
- 25: Biegeleiste
- 26: Biegeleiste
- 27: Biegekante
- 28: Biegekante
- 29: Biegekante
- 30: Biegekante
- 31: Packungsblechbiegevorrichtung
- 32: Rahmeneinrichtung
- 33: Rahmenelement
- 34: Rahmenelement
- 35: Schwenkachse
- 36: Verriegelungselement
- 37: Eingriffsabschnitt
- 38: Gegeneingriffsabschnitt
- 39: Antriebselement
- 40: Zylinder
- 41: Schwenkachse
- 42: Fläche
- 43: Schwenkachse
- 44: Rahmeneinrichtung
- 45: Transporteinrichtung
- 46: Bremseinrichtung
- 47: Führungseinrichtung
- 48: Führungseinrichtung
- 49: Antriebseinrichtung
- 50: Antriebseinrichtung
- 51: Werkzeugträger
- 52: Werkzeugträger
- 53: Befestigungsabschnitt
- 54: Exzenterachse
- 55: Exzenterachse
- 56: Exzenterachse
- 57: Exzenterachse
- 58: Lagerblock
- 59: Lagerblock
- 60: Lagerblock
- 61: Lagerblock
- 62: Lagerblockabschnitt
- 63: Lagerblockabschnitt
- 64: Verbindungsplatte
- 65: Verbindungsplatte
- 66: Exzenterkörper
- 67: Exzenterkörper
- 68: Antriebswelle
- 69: Antriebswelle
- 70: Antriebselement
- 71: Antriebselement
- 72: Antriebselement
- 73: Antriebselement
- 74: Positioniereinrichtung
- 75: Positionierrahmen
- 76: Seitenwand
- 77: Seitenwand
- 78: Linearmodul
- 79: Linearmodul
- 80: Schwenkachse
- 81: Schwenkachse
- 82: Drehmodul
- 83: Antriebselement
- 84: Klemmelement
- 85: Linearmodul
- 86: T-Getriebe
- 87: Kupplungselement
- 88: Winkelgetriebe
- 89: Riemen- oder Kettenantrieb
- 90: Riemen- oder Kettenantrieb
- 91: Verbindungswelle
- 92: Verbindungswelle

- g: Schwerkraftrichtung
- h3: Höhe
- M: Maschinenrichtung
- M2: Mittelachse
- UB: Umformbereich
- Z1: Zustand
- Z2: Zustand
- x: x-Richtung
- y: y-Richtung
- z: z-Richtung
- α: Winkel

## Patentansprüche

1. Packungsblechbiegevorrichtung (31) zum Herstellen eines gewellten Packungsblechs (10) für eine strukturierte Packung (3) einer Stoffaustauschkolonne (1), mit einem Umformwerkzeug (14), das dazu eingerichtet ist, an einem unverformten Packungsblech (10') Wellen (13) anzuformen, einer ersten Antriebseinrichtung (49) zum Bewegen einer ersten Werkzeughälfte (15) des Umformwerkzeugs (14), einer zweiten Antriebseinrichtung (50) zum Bewegen einer zweiten Werkzeughälfte (16) des Umformwerkzeugs (14), und einer Positioniereinrichtung (74) zum Positionieren der ersten Werkzeughälfte (15) relativ zu der zweiten Werkzeughälfte (16).

2. Packungsblechbiegevorrichtung nach Anspruch 1, wobei die erste Antriebseinrichtung (49) dazu eingerichtet ist, die erste Werkzeughälfte (15) senkrecht und parallel zu einer Maschinenrichtung (M) der Packungsblechbiegevorrichtung (31) zu bewegen.

3. Packungsblechbiegevorrichtung nach Anspruch 2, wobei die zweite Antriebseinrichtung (50) dazu eingerichtet ist, die zweite Werkzeughälfte (16) senkrecht und parallel zu der Maschinenrichtung (M) zu bewegen.

4. Packungsblechbiegevorrichtung nach Anspruch 3, wobei die Antriebseinrichtungen (49, 50) dazu eingerichtet sind, die Werkzeughälften (15, 16) senkrecht und gegensinnig zu der Maschinenrichtung (M) sowie parallel und gleichsinnig zu der Maschinenrichtung (M) zu bewegen.

5. Packungsblechbiegevorrichtung nach einem der Ansprüche 1 - 4, ferner umfassend eine erste Rahmeneinrichtung (32), in der das Umformwerkzeug (14) aufgenommen ist, wobei die erste Rahmeneinrichtung (32) ein erstes Rahmenelement (33), an dem die erste Werkzeughälfte (15) vorgesehen ist, und ein verschwenkbar an dem ersten Rahmenelement (33) gelagertes zweites Rahmenelement (34) umfasst, an dem die zweite Werkzeughälfte (16) vorgesehen ist.

6. Packungsblechbiegevorrichtung nach Anspruch 5, wobei die erste Rahmeneinrichtung (32) ein Verriegelungselement (36) umfasst, das dazu eingerichtet ist, das erste Rahmenelement (33) und das zweite Rahmenelement (34) formschlüssig miteinander zu verriegeln.

7. Packungsblechbiegevorrichtung nach Anspruch 5 oder 6, wobei die erste Rahmeneinrichtung (32) ein Antriebselement (39) umfasst, das dazu eingerichtet ist, die erste Rahmeneinrichtung (32) von einem geschlossenen Zustand (Z1) in einen geöffneten Zustand (Z2) und umgekehrt zu verbringen.

8. Packungsblechbiegevorrichtung nach einem der Ansprüche 5 - 7, ferner umfassend eine zweite Rahmeneinrichtung (44), die verschwenkbar an der ersten Rahmeneinrichtung (32) gelagert ist und die eine Transporteinrichtung (45), eine Bremseinrichtung (46) und/oder eine Führungseinrichtung (47) trägt.

9. Packungsblechbiegevorrichtung nach einem der Ansprüche 1 - 8, wobei die Positioniereinrichtung (74) dazu eingerichtet ist, die erste Werkzeughälfte (15) um eine y-Richtung (y) zu verdrehen, entlang der y-Richtung (y) zu verfahren, um eine z-Richtung (z) zu verdrehen und/oder entlang der z-Richtung (z) zu verfahren.

10. Packungsblechbiegevorrichtung nach Anspruch 9, wobei die Positioniereinrichtung (74) einen Positionierrahmen (75), der die erste Werkzeughälfte (15) trägt, ein erstes Linearmodul (78) und ein zweites Linearmodul (79) umfasst, wobei die Linearmodule (78, 79) dazu eingerichtet sind, die erste Werkzeughälfte (15) um die y-Richtung (y) zu verkippen und/oder entlang der z-Richtung (z) zu verfahren.

11. Packungsblechbiegevorrichtung nach Anspruch 9 oder 10, wobei die Positioniereinrichtung (74) ein Drehmodul (82) umfasst, das dazu eingerichtet ist, die erste Werkzeughälfte (15) um die z-Richtung (z) zu verdrehen.

12. Packungsblechbiegevorrichtung nach Anspruch 11, wobei das Drehmodul (82) zwischen einem Positionierrahmen (75) der Positioniereinrichtung (74) und der ersten Werkzeughälfte (15) angeordnet ist.

13. Packungsblechbiegevorrichtung nach Anspruch 11 oder 12, wobei das Drehmodul (82) ein Klemmelement (84) zum Fixieren der ersten Werkzeughälfte (15) in einer gewünschten Drehwinkelposition umfasst.

14. Packungsblechbiegevorrichtung nach einem der Ansprüche 9 - 13, wobei die Positioniereinrichtung (74) ein Linearmodul (85) umfasst, das dazu eingerichtet ist, die erste Werkzeughälfte (15) entlang der y-Richtung (y) zu verfahren.

15. Packungsblechbiegevorrichtung nach Anspruch 14, wobei das Linearmodul (85) zwischen einem Drehmodul (82) der Positioniereinrichtung (74) und einem Positionierrahmen (75) der Positioniereinrichtung (74) angeordnet ist.
